# EUROPEAN PATENT APPLICATION

(11) **EP 4 113 902 A1**
(43) Date of publication of application: **04.01.2023**
(21) Application number: 21181930.5
(22) Date of filing: 28.06.2021
(51) Int. Cl.: H04L 12/24

(54) **SYSTEM OPERATION BASED ON INTENT SERVICE GRAPH**

(71) Applicant: Nokia Technologies Oy, 02610 Espoo (FI)
(72) Inventor: SZILÁGYI, Péter, 1083 Budapest (HU); VULKÁN, Csaba, 1118 Budapest (HU)
(74) Representative: Nokia EPO representatives

(57) **Abstract**

Method comprising:
determining if an initial service consumes one or more consumed methods;
if the initial service consumes one or more consumed methods:
checking in a service register, for each of the one or more consumed methods, if a dependency service providing the respective consumed method is offered;
if, for at least one of the one or more consumed methods, the dependency service providing the respective consumed method is not offered: inhibiting offering of the initial service.

## Description

### Field of the invention

The present disclosure relates to intent based operation, in particular intent based network and service automation.

### Abbreviations

- 3GPP: 3^{rd} Generation Partnership Project
- 4G / 5G / 6G: 4^{th} / 5^{th} / 6^{th} Generation
- AI: Artificial Intelligence
- API: Application Programming Interface
- APIC: API Consumed
- APIP: API Provided
- BSS: Business Support System
- CAM: Cooperative Awareness Messages
- CM: Configuration Manager
- ETSI: European Telecommunications Standards Institute
- IBN: Intent-based Networking
- ID: Identifier
- IM: Intent Manager
- ISG: Intent Service Graph
- ML: Machine Learning
- NG-RAN: Next Generation RAN
- NLP: Natural Language Processing
- PDU: Protocol Data Unit
- RAN: Radio Access Network
- RTT: RoundTrip Time
- SO: Service Orchestrator
- SReg: Service Registry
- SRepo: Service Repository
- UPF: User Plane Function
- V2X: Vehicle to everything
- ZSM: Zero-touch Service and Network Management

### Background

Intent based network and service automation is discussed and standardized in ETSI ZSM. In the present context, the ZSM011 "Intent-driven autonomous networks" work item has particular relevance.

For intent based network management, it is desired that the network can interpret, validate and fulfil/assure high level declarative intents, without receiving the information on explicit actions to execute. Currently, there is no standard on how to express an intent, what is the lifecycle of an intent, and how the network is supposed to derive the actions it needs to execute in order to fulfil/assure an intent.

In general, the network entity receiving the intent must be capable of initiating a series of actions and potentially deploy long-term persisting closed loops that autonomously cause the fulfilment and assurance of the intents. Still, there is a technical gap between the definition of an intent (using whatever form of definition) and its fulfilment/assurance.

### Summary

It is an object of the present invention to improve the prior art.

According to a first aspect of the invention, there is provided an apparatus comprising: one or more processors, and memory storing instructions that, when executed by the one or more processors, cause the apparatus to perform: determining if an initial service consumes one or more consumed methods; if the initial service consumes one or more consumed methods: checking in a service register, for each of the one or more consumed methods, if a dependency service providing the respective consumed method is offered; if, for at least one of the one or more consumed methods, the dependency service providing the respective consumed method is not offered: inhibiting offering of the initial service.

According to a second aspect of the invention, there is provided a method comprising: determining if an initial service consumes one or more consumed methods; if the initial service consumes one or more consumed methods: checking in a service register, for each of the one or more consumed methods, if a dependency service providing the respective consumed method is offered; if, for at least one of the one or more consumed methods, the dependency service providing the respective consumed method is not offered: inhibiting offering of the initial service.

In the apparatus of the first aspect, the instructions, when executed by the one or more processors, may further cause the apparatus to perform at least one of the following, and the method of the second aspect may comprise at least one of the following:
If the initial service consumes the one or more consumed methods:
checking for each of the one or more consumed methods, if a dependency service providing the respective consumed method is registered in the service register;
if for at least one of the one or more consumed methods the dependency service providing the respective consumed method is not registered in the service register: inhibiting the offering of the initial service.

If the initial service consumes the one or more consumed methods and for each of the one or more consumed methods, the dependency service providing the respective consumed method is registered in the service register:
for each of the one or more dependency services providing the one or more consumed methods consumed by the initial service: determining if the respective dependency service consumes respective one or more dependency methods;
if the respective dependency service consumes the respective one or more dependency methods:
   checking for each of the one or more dependency methods, if a further dependency service providing the respective dependency method is registered in the service register;
   if for at least one of the one or more dependency methods the further dependency service providing the respective dependency method is not registered in the service register: inhibiting the offering of the respective dependency service.

If
- the initial service consumes the one or more consumed methods,
- for each of the one or more consumed methods, the dependency service providing the respective consumed method is registered in the service register, and
- for each of the one or more dependency services, each of the one or more further dependency services is registered in the service register:
checking in the service register, if each of the respective one or more further dependency services is offered;
if, for at least one of the dependency methods, the respective further dependency service is not offered: inhibiting the offering of the respective dependency service.

For each of the one or more dependency services:
if, for each of the respective one or more dependency methods, a respective further dependency service is offered: offering of the respective dependency service.

For each of the dependency services:
if the respective dependency service does not consume any dependency methods: offering the respective dependency service.

If the initial service does not consume any consumed method, or if the initial service consumes one or more consumed methods and, for each of the one or more consumed methods consumed by the initial service, the dependency service providing the respective consumed method is offered: offering the initial service.

If the initial service is offered:
monitoring if an implementation request to implement the initial service is received;
requesting an orchestrator to implement the initial service if the implementation request is received.

Monitoring if the service register receives a presentation request to present initial services;
for each of the initial services registered in the service register: inhibiting the presenting the respective initial service if the initial service is not offered.

For each of the initial services:
presenting the respective initial service if the respective initial service is offered and the service register receives the presentation request.

For each of the initial services:
checking if the presentation request comprises an indication of a user profile;
deciding if the respective initial service complies with the user profile;
inhibiting the presenting of the respective initial service if the respective initial service does not comply with the user profile.

The deciding is based on at least one of a keyword included in the user profile and a tag associated to the initial service.

For at least one of the one or more consumed methods consumed by the initial service, the service register associates a respective required runtime condition; and for the at least one of the one or more consumed methods:
checking if a respective provided runtime condition associated, in the service register, with the dependency service providing the respective consumed method fulfills the respective required runtime condition;
if the respective provided runtime condition does not fulfill the respective required runtime condition: inhibiting offering of the initial service.

The method of the second aspect may be a method of intent based operation.

According to a third aspect of the invention, there is provided a computer program product comprising a set of instructions which, when executed on an apparatus, is configured to cause the apparatus to carry out the method according to the second aspect. The computer program product may be embodied as a computer-readable medium or directly loadable into a computer.

According to some embodiments of the invention, at least one of the following advantages may be achieved:
- A system (such as a communication network) may be controlled (operated) based on intents;
- Operators may input only intents that can be executed by the system;
- Boundary conditions, such as user profiles and runtime requirements, may be incorporated.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a system according to some example embodiments of the invention and related actions;
Fig. 2 shows a system according to some example embodiments of the invention and related actions;
Fig. 3 shows parameter and method descriptors according to some example embodiments of the invention;
Fig. 4 shows a procedure for generating a ISG for an intent (or to decide that an ISG cannot be created) according to some example embodiments of the invention;
Fig. 5 shows a data structure for the list of APIC methods which may be used in the procedure of Fig. 4;
Fig. 6 shows a procedure according to some example embodiments of the invention;
Fig. 7 shows an intent service graph according to some example embodiments of the invention;
Fig. 8 shows an apparatus according to an example embodiment of the invention;
Fig. 9 shows a method according to an example embodiment of the invention; and
Fig. 10 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In order to successfully act on an intent, the network should already contain all the necessary enablers, including, for example, but not limited to: means to interpret and validate the syntax and semantics of the intent; means to check whether the intent is feasible (even if it is valid); collect information about the current status of the network and services that are relevant for the intent; identify which existing domain or resource controllers can be used to carry out reconfigurations or actions in order to fulfil/assure the intent; synthetize parameters for those controllers. All those enablers should be already implemented, and either deployed or ready for deployment in the network (e.g., having a virtual machine or container image with software containing the necessary implementation). Even self-learning components, which collect and analyse information from the network and services to improve their operation, should have been implemented by a vendor and deployed in the network. Therefore, the fulfilment/assurance of an intent in a given network is only possible (if possible at all) by using a particular combination of its existing capabilities.

Some example embodiments of this invention provide an intent interface (or a means of intent definition) for a given network so that the interface facilitates the definition of intents. The intent interface presents intents which can be executed based on the contained enablers. Thus, in principle, fulfilment/assurance is natively possible with the network's existing capabilities (that is, the interface does not let its user request an intent for which the necessary technical enablers are not available). A particular challenge here is how to collect, synthetize and expose high-level semantical concepts that are useful for an intent provider (such as a network operator or an enterprise), instead of enumerating the APIs of every service from a catalog with no instruction of how to use and combine them. Additionally, some example embodiments of the invention provide a solution to the related technical problem of how to autonomously select the necessary network capabilities and how to combine them so that they collectively may fulfil/assure a given intent. That is, some example embodiments of the invention bridge the technical gap between intent definition and fulfilment/assurance.

There are many high-level ways how to express an intent, such as using a (potentially restricted) natural language or some kind of machine readable formalism. However, these forms of expressing an intent are decoupled from the network itself that is supposed to then fulfil/assure the intent. They all expect the network to have a general intelligence similar to how human engineers are able to comprehend and synthetize new solutions based on their expertise. Such technology, however, does not exist, as networks (being handware/software systems) are only able to act on terms for which they have been programmed. Even AI/ML based methods are only able to automate tasks for which they have been trained. If they acquire new knowledge during their operation (such as in reinforcement learning), the means to accumulate and use new knowledge (and the formalism of knowledge itself) needs to be programmed as software implementation. Consequently, proposals where intents are defined independently from the system that is supposed to interpret, assure and fulfil them make it possible (and in fact easy) to define intents that not only cannot be fulfilled/assured by the network but not even parsed or interpreted. The technical ability of the fulfilment/assurance of the intents is conventionally not guaranteed.

Some example embodiments of the invention provide a method and an apparatus for defining intents based on the capabilities of available network services (i.e., in particular based on the capabilities of the enablers). Network services may include measurement, insight and analytics services; network management and automation services; domain and resource controllers; or any other software defined service. A network service is considered available if it is already deployed in the network or may be deployed via existing automation (e.g., its software implementation is available in a repository and may be subject to automated deployment via an orchestrator function).

The methods according to some example embodiments of the invention identify all network services that need to participate in the fulfilment/assurance of a defined intent. That is, the definition of an intent automatically generates on the network side a service based implementation plan for the fulfillment/assurance of the intent. As opposed to the prior art, where the definition of an intent is decoupled from the network that is supposed to fulfil/assure it, the benefit of some example embodiments of the invention is to ensure that only valid and implementable intents may be defined and offered to the user. Therefore, the method according to some example embodiments of the invention does not reject intents due to the lack of automation and/or implementation enablers in the network.

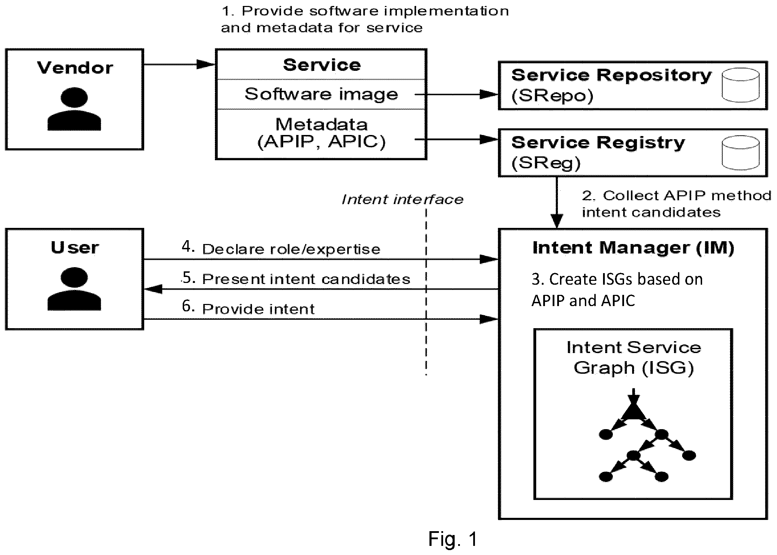

Fig. 1 shows an apparatus according to some example embodiments of the invention and some actions performed by the components of the apparatus and by different roles (here named: "Vendor" and "User") acting on the apparatus. The apparatus comprises the following logical entites: a Service Repository (SRepo), a Service Registry (SReg), and an Intent Manager (IM). Vendors of network services (or other persons/machines having a similar role, such as internal developers of the network operator) provide a deployable software package of their service along with a so-called service descriptor metadata (action 1 in Fig. 1). The deployable software package is transferred into the Service Repository, whereas the service descriptor is stored in the Service Registry. The service descriptor metadata of each service may comprise two APIs: the API-Provided (APIP) and (optionally) the API-Consumed (APIC). The APIP of a given service is the API that the service exposes for consumption by other services. That is, APIP describes what can be requested from the given service. The APIC of a given service is the API that the service consumes (from other services) to perform its business logic and provide its own APIP. That is, APIC describes the dependency of a service on other services. Both the APIP and APIC may comprise individual methods. Some services do not comprise APIC, i.e., they do not depend on methods provided by other services.

The Intent Manager is responsible to generate an intent API that may be exposed towards a user of the network (action 2). The user may be a human user (such as an operations expert), or some program acting on behalf of a (human) user. The Intent Manager generates the intent API by traversing the SReg and selecting those APIP methods that are suitable to express a high-level declarative capability matching the role and expertise of the human user.

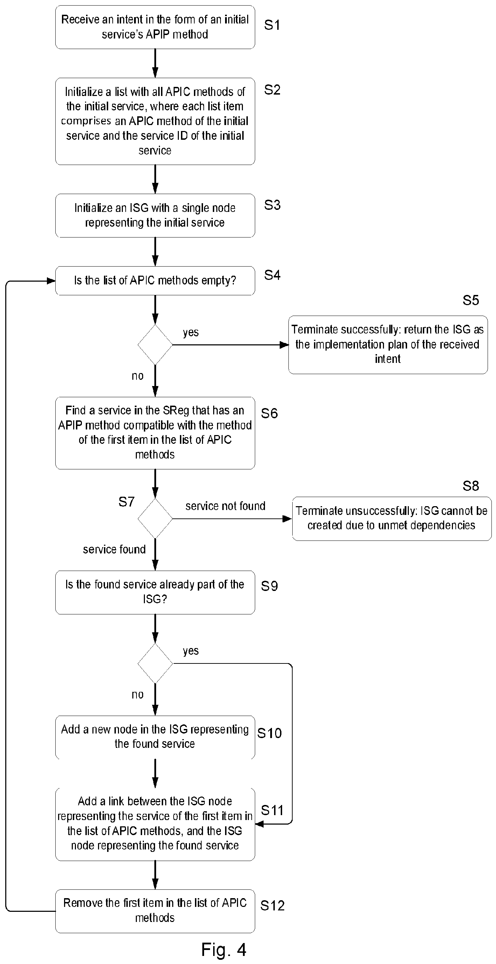

In order to present to the user only those intent APIs that can be fulfilled, the IM recursively builds a so-called Intent Service Graph (ISG) (action 3). The ISG is a directed graph where each graph node is a service, and an edge directed from a first service to a second service represents that the first service has one or more APIC methods that is/are provided by the second service's APIP. The ISG therefore represents a full service based software implementation plan of an intent candidate: the ISG contains the service that can directly receive the intent in a form of an APIP method call (denoted by a triangle in Fig. 1), and all other supporting services (and their interconnection) that also need to be deployed and participate in the fulfillment/assurance of the intent (denoted by black dots in Fig. 1). In general, each of the services may be considered as a root of a portion of the ISG. The APIP methods for which a ISG may be built, are considered as intent candidates. In general, each of the APIPs of the services registered in SReg may potentially be an intent API. The details of building the ISG are explained with respect to Fig. 4.

As an option, the IM may present different views of the offered service APIPs based on the profile of the (human) user and, thus, perform a filtering on the offered services' APIPs accordingly, generating personalized intent candidates for each user. Accordingly, the user may present its role/expertise to the IM, e.g. as a part of a user profile (action 4). Additionally, the IM considers whether an available service (i.e., a service that is registered in SReg) that offers an intent candidate APIP method is also deployable. An available service is deployable under two conditions: either it has empty APIC (no dependencies), or each method in its APIC is part of at least one other deployable service's APIP (i.e., its dependencies are implemented by other services that have no dependencies or by other services that have their dependencies satisfied). That is, a registered service is deployable if a complete ISG may be built with the registered service as the top node thereof. The IM only exposes intent candidate APIP methods to the human user that are provided by deployable services (action 5). Therefore, an intent is represented by a deployable service's APIP method. I.e., some example embodiments of the invention provide a first concrete proposal for intent formulation, where the intent is tied to implementation enablers. In contrast, in the prior art, intents are very high-level abstractions without even considering what would be the network side technology that is able to interpret and fulfill/assure intents (other than referring to AI/ML in general).

The above recursive definition of a deployable service yields a method for the IM to automatically discover all services whose contribution is required to implement an intent. Users may provide an intent for the IM for fulfillment/assurance (action 6) by referring to one of the intent candidate APIP methods that the IM presented in action 4. The user may provide method parameters and their values as part of their reference to the intent candidate APIP method.

IM may build the ISGs at any time, independent from an intent request by a user. IM may cache the generated ISGs and offer the respective APIP methods (optionally filtered according to the user's profile) to the user at any time.

In some example embodiments, the IM takes into account that a service (the data stored in SRepo and/or SReg) may change. In some of these embodiments, each time when a user selects an intent (and provides corresponding parameters), the IM builds the respective ISG again. Only if the latest building of the ISG is successful, the intent is deployable. If it is not successful, the IM rejects the intent request from the user.

In some example embodiments, the IM periodically (or due to some other event) repeats action 3 in order to update the cached ISGs. These example embodiments provide a compromise between static ISGs and rebuilding the ISG each time a user provides an intent request. In some example embodiments, IM may consider the reception of an intent request as an event to update the (all) cached ISGs.

Thus, some example embodiments of the invention may provide one or more of the following key features:
- Structuring the service metadata into APIP/APIC as enabler for service orchestration and programmability;
- Concept and method of ISG in intent-based networking as a concrete apparatus for the implementation of an intent;
- Concept and method to generate intent user interface based on the ISG (service APIP) and user role/expertise

Some differences to the prior art may be as follows:
- Dynamic discovery of potential intents that could be implemented by the network, rather than having a pre-defined list of intents that the user can select and parameterize. In many current IBN products, intents have to be pre-defined by the developer or user of the system. A pre-defined intent comes with the program code that is executed to fulfill the intent. In some example embodiments, the developer/user does not have to provide intent implementations.
- Disaggregation of automation implementation and multi-vendor inter-working: the set of micro-services declaring APIP/APIC metadata can be implemented by any vendor, and the set of micro-services can be organically extended with new services. There is no single product that is fully responsible for implementing automation and intent fulfillment/assurance. In many current IBN products, intent interpretation and fulfillment/assurance is centralized, the only extension possibility is to create new intent types, but those remain specific for the IBN product.
- User role/expertise based selective offering of potential intents to the user. Technology related intents may not be offered to a user in BSS role, whereas business related intents may not be offered to a user in engineer role.
- Further boundary conditions, such as runtime requirements, may be taken into account, too.

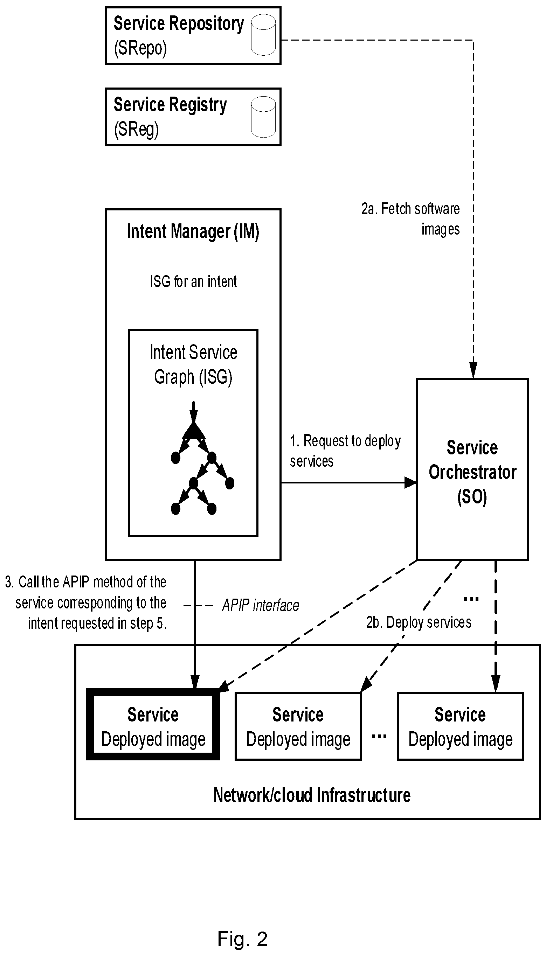

The actual deployment of services may be performed by a Service Orchestrator (SO) entity, which has the capability to deploy services from available software images (see Fig. 2). Upon having constructed the ISG implementation plan of an intent, the IM may request the SO to deploy all services that are part of the ISG (action 1 in Fig. 2). The SO may fetch the software image of the requested services from the SRepo (action 2a) and deploy them on the network/cloud infrastructure (action 2b) that is the execution platform of services. Finally, in order to start the fulfillment/assurance of the intent, the IM calls the APIP method of the service that can directly receive the intent in a form of an APIP method call (denoted by a box with thick lines in Fig. 2). The method call (action 3) may transfer the method parameters and their values to the service as provided by the user in action 6 of Fig. 1, thus inserting the specific intent into the service.

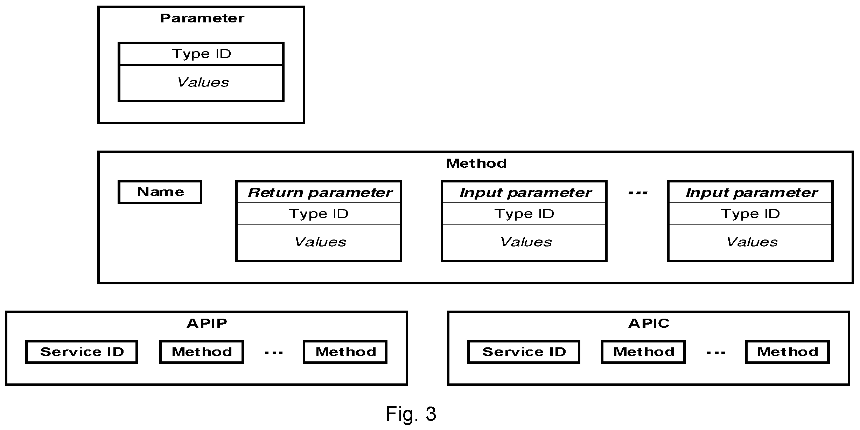

The APIP and APIC service descriptors may both be implemented as a unique service ID (unique within the apparatus comprising SRepo, SReg, and IM) and a set of methods. Each method is denoted by a unique method name, optionally a returned parameter and optionally a list of input parameters. Each parameter has a -unambiguous type identifier and optionally a list or range of potential values that may be assigned to the parameter. Each parameter may comprise just a single value or a plurality of values, such as a vector or a matrix. The data structure of parameters, methods and APIs is shown in Fig. 3. Italics represent optional elements. Two parameters are compatible with each other if their type identifier is the same. Two methods are compatible with each other if they have the same method name, return the same parameter (or do not return a parameter) and their list of input parameters are pairwise compatible (i.e., they have the same number of input parameters and the n-th input parameter of each method has the same type identifier). The method name and parameter type identifiers are used to encode semantical information. For example, a measurement quantity may be represented by a parameter with a unambiguous type identifier (e.g., N3_rtt_upf_ngran_50ms), which represents the exact definition of the measurement (e.g., N3 round-trip time between the NG-RAN and the UPF), its unit (e.g., milliseconds) and the circumstances of its collection (e.g., collected in the UPF for every PDU session and aggregated for 50 milliseconds time windows). A service may be implemented with a method in its APIP that provides this measurement by declaring a method with a name (e.g., get_N3_rtt_upf_ngran_50ms) and return type (N3_rtt_upf_ngran_50ms). Another service may provide analytics on top of this measurement. Therefore, it declares the same method as part of its APIC descriptor and declares a method in its APIP (e.g., get_rtt_trend) that returns a new parameter (e.g., rtt_trend) providing an analysis of the trend in the RTT. For example, the trend may be encoded by one of three potential values: "increase", "stagnate" or "decrease". The detailed semantics associated with a unambiguous parameter type identifier may be published openly as part of the service's APIP/APIC documentation, targeted for service developers. However, the APIP/APIC remains machine readable because, in order to detect parameter and method compatibility, unambiguous values are compared. Parameter names may also follow reverse domain name notation to create namespaces for vendors or services for those parameters that are specific to the vendor or service (e.g., com.nokia.meas.N3_rtt_upf_ngran_50ms instead of N3_rtt_upf_ngran_50ms to indicate that the definition of the parameter is specific to a vendor).

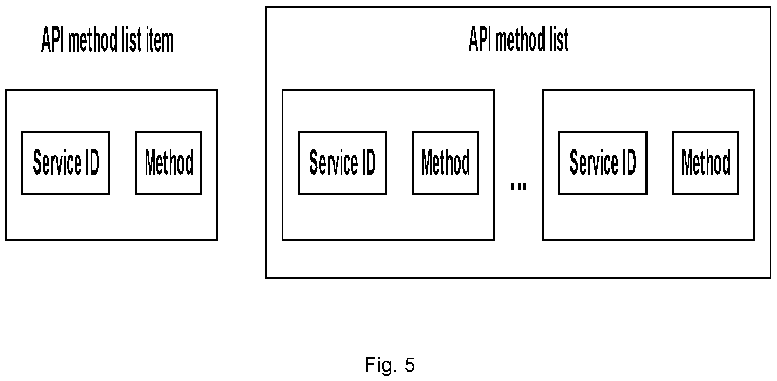

Fig. 4 shows a procedure for generating the ISG at greater detail. The procedure is typically executed by the IM. The input of the procedure is an intent in a form of an method that is part of an APIP of an initial service. The output of the procedure is the ISG describing an implementation plan for calling this APIP method, or an indication that no such ISG can be created due to lack of enablers. The procedure's main logic is to maintain a list of APIC method + service name pairs (a data structure may be used as illustrated in Fig. 5). The list is initialized with the APIC methods of the initial service. Each APIC method on the list needs to be resolved by pairing with another service whose APIP contains a compatible method. This other service is called a dependency service. As new dependency services are discovered, their APIC methods are also added to the list as their dependencies also need to be satisfied recursively. The procedure continues until all APIC methods on the dynamically growing list have been resolved (successful procedure termination) or an unresolvable APIC method is encountered (unsuccessful procedure termination). During the discovery of dependency services, an ISG is constructed along the APIC-APIP method relations to capture which service needs to call which other service's APIP. When an APIC method is found to be compatible with an APIP method, the dependency service corresponding to the APIP method is added to the ISG as a new node (unless it is already present); additionally, an edge is created from the service with the APIC method to the dependency service.

In detail, in S1, IM receives an intent. For example, the intent may be in the form of an initial service's APIP method. The APIP method of each of the services registered in SReg may be the initial service's APIP method.

Then, in S2, IM initializes a list comprising all APIC methods of the initial service. Each list item comprises a respective APIC method of the initial service and the service Id of the initial service.

In S3, a ISG is initialized such that it comprises a single node representing the initial service. If the list of APIC methods of the initial service is empty (yes in S4), the ISG is successfully generated (S5). It may serve as an implementation plan of the received intent.

If the list of APIC methods is not empty (no in S4), IM searches for a service having a APIP method compatible with the method of one or the items (e.g. the first item or the last item) in the list of APIC methods (S6). If such a service is not found (S7 = service not found), the ISG generation fails (ends unsuccessfully, S8). The ISG cannot be created due to unmet dependencies.

If a service having a compatible APIP method is found (S7 = service found), it is checked in S9 if the found service is already represented in the ISG. If not (S9 = no), a new node representing the found service is added to the ISG (S10). If the found service is already represented in the ISG (S9 = yes), S10 is skipped.

The procedure continues with S11, where a link between the node representing the service whose APIC methods are considered and the found service providing a compatible APIP method is added to the ISG. Then, the item selected in S6 representing the APIC method for which a compatible method was found is removed from the list of APIC methods (S12), and the method returns to S4.

Fig. 5 shows a data structure of the API method list. It may be used in the actions S2, S4, and S12 for generating an ISG according to Fig. 4. I.e., each API method list item comprises a service ID and an indication of a respective APIC method of the service. The indication of the APIC method may comprise an ID of the method and the parameter(s) consumed by the method.

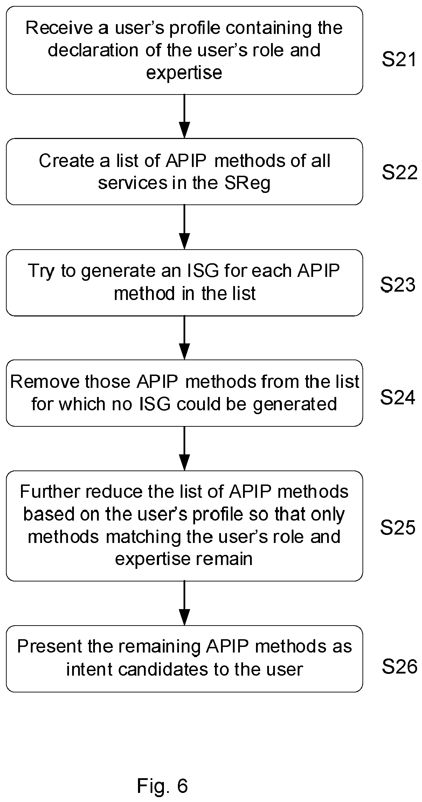

Fig. 6 shows a method to create a list of intent candidate APIP methods based on a user's profile (role and/or expertise). In S21, the user's profile (or at least a relevant part thereof, such an indication of the role and/or the expertise) is received. In S22, the method traverses the SReg to list all APIP methods, because every feasible intent may be represented by an APIP method call of an existing registered service. The same data structure as that of Fig. 5 may be used for the listing, so that not only the APIP methods but also the corresponding services are captured. Then, in S23 and S24, the list of all APIP methods is reduced to those for which an ISG can be generated, that is, they are implementable with the set of services registered in the SReg. Implementable services (including actually implemented services and services which may be implemented according to the decision method of Fig. 4) may be offered to the user. This step reuses the procedure of Fig. 4 to check whether an ISG can be generated for each APIP method (S23). APIP methods for which the procedure terminates unsuccessfully are removed from the list (S24). Finally, the list of APIP methods is further reduced to keep only those methods that match the user's role and expertise (S25). The remaining APIP methods are presented to the user as intent candidates (S26).

Filtering the method list based on the user's role and expertise requires a user profile representation and a filtering method that takes a user profile and an APIP method and outputs a true/false indication. For example, true may mean that the user profile matches the APIP method (or vice versa).
- The user profile may be represented by a list of keywords that describe a role (e.g., "radio expert", "DevOps engineer", "business developer", etc.) or a technical expertise field (e.g., "end-to-end quality of service", "network slicing", "service orchestration", "mobile backhaul", etc.). Multiple keywords may be present in a single user profile to indicate diverse expertise or multiple roles.
- The filtering method may be implemented by comparing the keywords in the user profile with the method name and parameter type IDs of the APIP methods to find syntactical (word-by-word) or semantical similarities. Semantical similarities may be implemented by using a semantic preserving word embedding NLP method such as word2vec. In support of such a filtering method, APIP methods may be optionally tagged (e.g. by the service vendors) to indicate their judgement of the expertise or role required by the user of each method. In this case, the filtering method may compare keywords in the user profile with method tags. Popular tags may be standardized to help express roles and expertise in an interoperable way.

The successful construction of an ISG for a service's APIP method ensures the implementability of the method call in terms of formal software availability and technical capability. However, there may be additional runtime requirements between two services with a pair of compatible APIP-APIC methods that are beyond the compatibility of the methods themselves. These include the tolerated load or method frequency call of an API method: if an APIC method of one service requires to call a compatible APIP method of another service 100x per second, but the other service's implementation only supports 10x per second calls, the two services cannot collaborate during runtime in practice despite their formal compatibility. Likewise, if an APIC method requires that the compatible APIP method never fails or always returns within a given time, but these runtime conditions are not met, the service of the APIC method cannot rely on the service of the APIP method. A further example is the expected quality of the data (e.g., measurements, analytics result, insight, etc.) that one method should provide: even if formally the method provides data with expected type and semantics, it's quality (accuracy, reliability, granularity, etc.) may still be poor.

One solution to these problems could be to incorporate runtime conditions into the semantics of the method name and parameters, so that APIC and APIP methods only become compatible if the runtime conditions are also met. For example, the tolerated method calls per second could be part of the method name (e.g., N3_rtt_upf_ngran_50ms_**100caIIPerSec**). This is a clean solution leveraging the full automation of the ISG construction and SReg system. Additionally, service implementations should always have internal logic to monitor and evaluate in runtime whether the expected requirements are met, and the quality of data exchanged between auto-connected interfaces is sufficient. If not, services may raise an alarm to the IM declaring incompatibility of their interface with the specific other service. This information may be stored in the service's descriptor (e.g., blacklisting certain other services) and used for later ISG constructions to exclude blacklisted services during the APIC method resolution procedure.

A proof of concept was implemented. The list of services (with their APIP and APIC) as provisioned in the SReg are listed below. The type code is: return parameter type *ID method* name (input parameter type ID...)):
=== **Service com.nokia.service.V2xMeasurement**
   **--- API provided (APIP):**
   com.nokia.meas.rtt.e2e *getAppV2xCamRttE2e()*
   com.nokia.meas.throughput *getAppV2xCamThroughput()*
   com.nokia.meas.throughput *getAppV2xSeeThruThroughput()*
   com.nokia.resource.bandwidth *getAppV2xCamBandwidthDemand()*
   com.nokia.resource.bandwidth *getAppV2xSeeThruBandwidthDemand()*
=== **Service com.nokia.service.ResourceManager**
   --- **API provided (APIP):**
   std.void *requestAppV2xCamBandwidth* (com.nokia.resource.bandwidth)
   std.void *requestAppV2xSeeThruBandwidth*(com.nokia.resource.bandwidth)
=== **Service com.nokia.service.V2xQosManager**
   **--- API provided (APIP):**
      std.void requestAppV2xCamQos(com.nokia.app.qos, com.nokia.cond.userlimit, com.nokia.cond.timelimit)
      std.void *requestAppV2xSeeThruQos*(com.nokia.app.qos, com.nokia.cond.userlimit, com.nokia.cond.timelimit)
   --- **API consumed (APIC):**
      com.nokia.meas.rtt.e2e *getAppV2xCamRttE2e()*
      com.nokia.resource.bandwidth *getAppV2xCamBandwidthDemand()*
      com.nokia.resource.bandwidth *getAppV2xSeeThruBandwidthDemand()*
      std.void *requestAppV2xCamBandwidth*(com.nokia.resource.bandwidth)
      std.void *requestAppV2xSeeThruBandwidth*(com.nokia.resource.bandwidth)

The list of intents generated from the service descriptors present in the SReg are the followings:
=== **Intent com.nokia.service.V2xQosManager.requestAppV2xCamQos appQos**
   --> **Predicate:** com.nokia.app.qos
   --> **Condition:** com.nokia.cond.userlimit example: [10, 20, 50, 100, 200, 500]
   --> **Condition:** com.nokia.cond.timelimit example: [0900-1700]
=== **Intent com.nokia.service.V2xQosManager.requestAppV2xSeeThruQos_appQos**
   --> **Predicate:** com.nokia.app.qos
   --> **Condition:** com.nokia.cond.userlimit example: [10, 20, 50, 100, 200, 500]
   --> **Condition:** com.nokia.cond.timelimit example: [0900-1700]

The intents are presented to the user in a form of a predicate and a list of conditions. Technically, both the predicate and conditions are APIP method parameters of a service, but they emphasize the parameter's role: a predicate is used to declare a request, and a condition is used to provide conditions when or up to what limits the request should be met. This presentation is merely to help the user and belongs to the presentation layer of the IM.

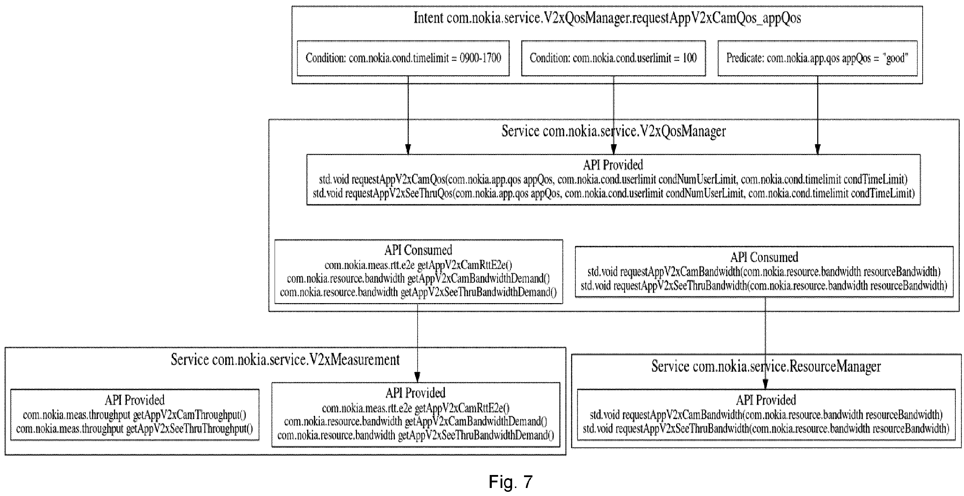

The ISG generated for one of the intents, com.nokia.service.V2xQosManager.requestAppV2xCamQos appQos , is shown in Fig. 7. This intent requests good V2X CAM QoS between 9:00-17:00 for up to 100 users.

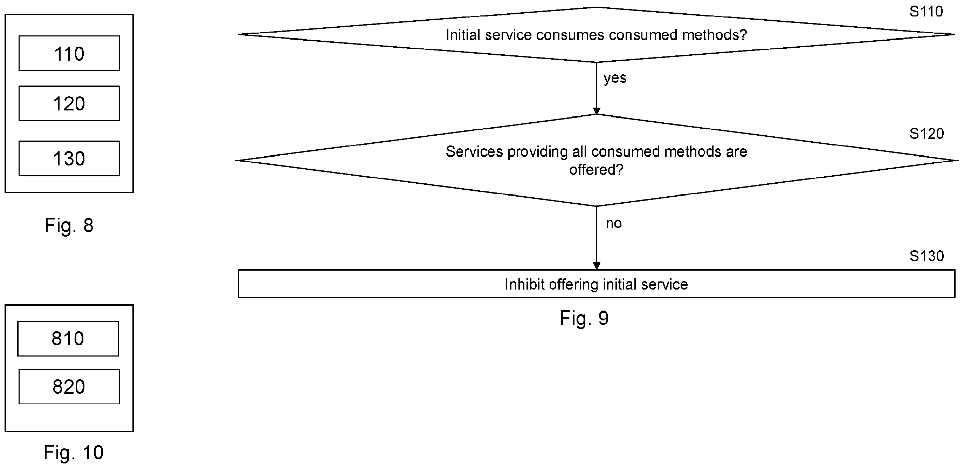

Fig. 8 shows an apparatus according to an example embodiment of the invention. The apparatus may be an intent manager, or an element thereof. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for determining 110, means for checking 120, and means for inhibiting 130. The means for determining 110, means for checking 120, and means for inhibiting 130 may be a determining means, checking means, and inhibiting means, respectively. The means for determining 110, means for checking 120, and means for inhibiting 130 may be a determiner, checker, and inhibiter, respectively. The means for determining 110, means for checking 120, and means for inhibiting 130 may be a determining processor, checking processor, and inhibiting processor, respectively.

The means for determining 110 determines if an initial service consumes one or more consumed methods (S110). The initial service may be the root service in the ISG, or it may be any other service comprised in the ISG.

If the initial service consumes one or more consumed methods (S110 = yes), the means for checking 120 checks in a service register, for each of the one or more consumed methods, if a dependency service providing the respective consumed method is offered (S120). I.e., the means for checking 120 checks if the respective consumed method is implemented or at least implementable according to the information stored in the service register.

If the dependency service providing the respective consumed method is not offered for at least one of the one or more consumed methods (S120 = no), the means for inhibiting 130 inhibits offering of the initial service (S130). On the other hand, according to some example embodiments of the invention, if the dependency service providing the respective consumed method is offered for each of the one or more consumed methods, or if the initial service does not consume any method, the initial service may be offered.

Fig. 10 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least the method according to Fig. 9 and related description.

A service graph (such as an ISG) represents dependencies between nodes (here: services). The invention is not limited to representation of the dependencies by a service graph. Other representations, such as a textual representation, may be employed instead of the ISG or in addition thereto.

Some example embodiments of this invention are particularly useful for the operation of a communication network, such as 3GPP networks such as 4G, 5G, 6G, 7G networks, etc. It may be used in any wireless (mobile) and wireline communication networks. It may be used even outside of communication networks, too, where a system should be controlled (operated) based on intents. An example of the latter is factory automation.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a Intent Manager, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus comprising:
one or more processors, and
memory storing instructions that, when executed by the one or more processors, cause the apparatus to perform:
determining if an initial service consumes one or more consumed methods;
if the initial service consumes one or more consumed methods:
checking in a service register, for each of the one or more consumed methods, if a dependency service providing the respective consumed method is offered;
if, for at least one of the one or more consumed methods, the dependency service providing the respective consumed method is not offered: inhibiting offering of the initial service.

2. The apparatus according to claim 1, wherein the instructions, when executed by the one or more processors, further cause the apparatus to perform, if the initial service consumes the one or more consumed methods:
checking for each of the one or more consumed methods, if a dependency service providing the respective consumed method is registered in the service register;
if for at least one of the one or more consumed methods the dependency service providing the respective consumed method is not registered in the service register: inhibiting the offering of the initial service.

3. The apparatus according to claim 2, wherein the instructions, when executed by the one or more processors, further cause the apparatus to perform, if the initial service consumes the one or more consumed methods and for each of the one or more consumed methods, the dependency service providing the respective consumed method is registered in the service register:
for each of the one or more dependency services providing the one or more consumed methods consumed by the initial service: determining if the respective dependency service consumes respective one or more dependency methods;
if the respective dependency service consumes the respective one or more dependency methods:
checking for each of the one or more dependency methods, if a further dependency service providing the respective dependency method is registered in the service register;
if for at least one of the one or more dependency methods the further dependency service providing the respective dependency method is not registered in the service register: inhibiting the offering of the respective dependency service.

4. The apparatus according to claim 3, wherein the instructions, when executed by the one or more processors, further cause the apparatus to perform, if
• the initial service consumes the one or more consumed methods,
• for each of the one or more consumed methods, the dependency service providing the respective consumed method is registered in the service register, and
• for each of the one or more dependency services, each of the one or more further dependency services is registered in the service register:
checking in the service register, if each of the respective one or more further dependency services is offered;
if, for at least one of the dependency methods, the respective further dependency service is not offered: inhibiting the offering of the respective dependency service.

5. The apparatus according to claim 4, wherein the instructions, when executed by the one or more processors, further cause the apparatus to perform, for each of the one or more dependency services:
if, for each of the respective one or more dependency methods, a respective further dependency service is offered: offering of the respective dependency service.

6. The apparatus according to any of claims 3 to 5, wherein the instructions, when executed by the one or more processors, further cause the apparatus to perform, for each of the dependency services:
if the respective dependency service does not consume any dependency methods: offering the respective dependency service.

7. The apparatus according to any of claims 1 to 6, wherein the instructions, when executed by the one or more processors, further cause the apparatus to perform:
if the initial service does not consume any consumed method, or if the initial service consumes one or more consumed methods and, for each of the one or more consumed methods consumed by the initial service, the dependency service providing the respective consumed method is offered: offering the initial service.

8. The apparatus according to claim 7, wherein the instructions, when executed by the one or more processors, further cause the apparatus to perform, if the initial service is offered:
monitoring if an implementation request to implement the initial service is received;
requesting an orchestrator to implement the initial service if the implementation request is received.

9. The apparatus according to any of claims 1 to 8, wherein the instructions, when executed by the one or more processors, further cause the apparatus to perform:
monitoring if the service register receives a presentation request to present initial services;
for each of the initial services registered in the service register: inhibiting the presenting the respective initial service if the initial service is not offered.

10. The apparatus according to claim 9, wherein the instructions, when executed by the one or more processors, further cause the apparatus to perform, for each of the initial services:
presenting the respective initial service if the respective initial service is offered and the service register receives the presentation request.

11. The apparatus according to claim 10, wherein the instructions, when executed by the one or more processors, further cause the apparatus to perform, for each of the initial services:
checking if the presentation request comprises an indication of a user profile;
deciding if the respective initial service complies with the user profile;
inhibiting the presenting of the respective initial service if the respective initial service does not comply with the user profile.

12. The apparatus according to claim 11, wherein the deciding is based on at least one of a keyword included in the user profile and a tag associated to the initial service.

13. The apparatus according to any of claims 1 to 12, wherein for at least one of the one or more consumed methods consumed by the initial service, the service register associates a respective required runtime condition; and the instructions, when executed by the one or more processors, further cause the apparatus to perform, for the at least one of the one or more consumed methods:
checking if a respective provided runtime condition associated, in the service register, with the dependency service providing the respective consumed method fulfills the respective required runtime condition;
if the respective provided runtime condition does not fulfill the respective required runtime condition: inhibiting offering of the initial service.

14. Method comprising:
determining if an initial service consumes one or more consumed methods;
if the initial service consumes one or more consumed methods:
checking in a service register, for each of the one or more consumed methods, if a dependency service providing the respective consumed method is offered;
if, for at least one of the one or more consumed methods, the dependency service providing the respective consumed method is not offered: inhibiting offering of the initial service.

15. A computer program product comprising a set of instructions which, when executed on an apparatus, is configured to cause the apparatus to carry out the method according to claim 14.
